# EUROPEAN PATENT SPECIFICATION

(11) **EP 2 155 456 B1**
(45) Date of publication and mention of the grant of the patent: **28.11.2012**
(21) Application number: 08762553.9
(22) Date of filing: 13.06.2008
(51) Int. Cl.: B28C 9/04, B60P 3/16, E01C 19/46, B01F 13/00

(54) **MOBILE MIXING APPARATUS**
MOBILE MISCHVORRICHTUNG
APPAREIL DE MÉLANGE MOBILE

(30) Priority: 13.06.2007 GB 0711423
(43) Date of publication of application: 24.02.2010
(73) Proprietor: Nurock Mixers Limited, Avonmouth, Bristol BS11 9YA (GB)
(72) Inventor: JONES, Graham Anthony, Liverpool, Merseyside L18 2EQ (GB)
(74) Representative: Manley, Nicholas Michael
(86) International application number: PCT/GB2008/050443
(87) International publication number: WO 2008/152426

(56) References cited:
- IE-A2- 20 020 923
- JP-A- 10 148 033
- JP-A- 2006 175 715
- US-A- 5 730 523
- US-A- 6 007 233

## Description

The present invention relates to mobile mixing apparatus and in particular , but not exclusively, to mobile concrete mixers.

Numerous types of mobile concrete mixers exist which allow concrete to be mixed on site. Most of these comprise a chassis mounted on supporting wheels.

Mounted at one end of the chassis is a water container and at the other end of the chassis is a cement hopper. Mounted on the chassis between the water container and the cement hopper is a pair of sand and stone hoppers. A mixing station is provided on the side of the cement hopper remote from the sand and stone hoppers. Sand and stone is gravity-fed onto a conveyor which carries them under the cement hopper to a mixing station where water, pumped from the container, and cement are added and mixed.

Examples of such concrete mixers can be found, for example, in GB-A-2009608, which discloses a concrete mixer in the form of a trailer, and EP-A-305150 which discloses a concrete mixer mounted on a truck.

The prior art mixers are generally arranged in an elongate layout, which makes them too large to manoeuvre into certain locations

Reference is also made to US-A-6 007 233, US-A-5 730 523, IE 20 020 923 A2 and JP10-148033 A.

US-A-6 007 233 discloses a mobile apparatus for mixing and dispensing mixtures from an ingredients container including a hopper with a channel-shaped floor portion containing a screw auger. A cover over the screw auger may be raised so that a gap between the cover and the hopper walls allows metered amounts of ingredients to be conveyed by the screw auger to a separate mixer and a dispenser.

US-A-5 730 523 discloses a portable concrete plant that consists of a transporting vehicle, a rotating drum for mixing the concrete, containers for sand and crushed rock, a scale for weighing a mixture of sand and crushed rock, a conveyor for conveying the mixture of sand and crushed rock to the rotating drum, a container for portland cement, a conveyor for conveying the portland cement to the rotating drum, a source of water and a concrete pump for dispensing the concrete from the rotating drum. The apparatus may be controlled by a computer which controls the various containers and scales so as to vary the proportions of components to produce concrete of varying properties.

IE 20 020 923 A2 discloses a batching plant for use in the manufacture of concrete and like products, comprising a mixer, a sand storage bin and a stone aggregate storage bin. Conveyor means are provided for delivering the sand and aggregate to the mixer. The plant also includes a water storage tank and means for delivering water from the water storage tank to the mixer.

JP10-148033 A discloses a mixing apparatus according to the pre-amble of claim 1 and teaches in particular that sand, cement, additives and the like are metered and discharged to a mixing chamber by a screw conveyors at a prescribed ratio, made homogenous by rotating and mixing of a rotating plate, and discharged to an agitating chamber. A water supply is received from a nozzle, and the mixture is kneaded by a moving blade, discharged as mortar and transferred by a wheelbarrow or a mortar discharge pump.

The present invention seeks to overcome or alleviate the problems associated with the prior art.

In accordance with a first aspect of the present invention, a mobile mixing apparatus comprises:
(a) a frame having spaced-apart gnound-engaging supports located on opposite sides of the frame;
(b) a hopper mounted on the frame and having a plurality of compartments for solid components;
(c) a mixing station;
(d) conveyor means for transferring the solid components to the mixing station;
(e) a tank for liquid, located under the hopper between the opposed ground-engaging supports.

By locating the liquid-containing tank under the hopper, between the supports, the centre of gravity of the mixing apparatus is lowered and the apparatus is considerably more compact as compared with the prior art mixers.

Preferably, the spaced-apart ground-engaging supports comprise wheels or tracks.

In this way, if the apparatus is transported with liquid, e.g. water, in the tank, the location of the tank between the wheels or tracks on opposite sides of the frame significantly reduces the effect of movement of liquid within the tank as the apparatus is accelerated, decelerated and turns corners.

The tank may conveniently be located beneath the conveyor means. Preferably, the tank is elongate.

Preferably, the conveyor means comprises a conveyor belt located at the base of the hopper.

Preferably, the compartments are formed from elongate parallel baffles extending the length of the hopper.

Preferably, said hopper is divided into two side compartments, e.g. for sand and stone respectively, and third compartment between the side compartments, e.g. for cement.

Preferably, the third compartment has a floor or base above the base of the side compartments, preferably directly above the said conveyor means.

Preferably, the mixing apparatus further comprises second conveyor means, for transferring solids from the third compartment to the mixing station.

Preferably, the hopper is an elongate structure V-shaped in cross section. Preferably, the mixing station is provided adjacent an end wall of the hopper.

In one embodiment, the mixing apparatus is adapted to be trailed and a connector means is provided to connect with the tow point on a vehicle.

In another embodiment, the mixing apparatus has tracks to move it over rough terrain. The tracks may be powered.

Also disclosed herein, but not forming part of the present invention, is a mixing apparatus which comprises:
(a) a frame having spaced-apart ground-engaging supports located on opposite sides of the frame;
(b) a hopper mounted on the frame and having first and second side compartments and a third compartment located between and above the first and second compartments, the base of the third compartment being located higher than the base of the first and second compartments;
(c) a mixing station;
(d) first conveyor means for transferring solid components from first and second compartments to the mixing station; and
(e) second conveyor means, separate from said first conveyor means for transferring solids from the third compartment to the mixing station.

This results in a very compact mixing apparatus.

Preferably, the mixing apparatus further comprises a tank for liquid, located under the hopper between opposed ground-engaging supports on either side of the frame.

By locating the liquid-containing tank under the hopper, between the supports, the centre of gravity of the mixing apparatus is lowered and the apparatus is considerably more compact as compared with the prior art mixers.

Preferably, the spaced-apart ground-engaging supports comprise wheels or tracks.

In this way, if the apparatus is transported with liquid, e.g. water, in the tank, the location of the tank between the wheels or tracks on opposite sides of the frame significantly reduces the effect of movement of liquid within the tank as the apparatus is accelerated, decelerated and turns corners.

The tank may conveniently be located beneath the first conveyor means.

Preferably, the tank is elongate.

Preferably, the first conveyor means comprises a conveyor belt located at the base of the hopper.

Preferably, the compartments are formed from elongate parallel baffle extending the length of the hopper.

Preferably, the base of the third compartment is located directly above the first conveyor means.

Preferably, the hopper is an elongate structure V-shaped in cross section. Preferably, the mixing station is provided adjacent an end wall of the hopper.

In one arrangement, the mixing apparatus is adapted to be trailed and a connector means is provided to connect with the tow point on a vehicle.

In another arrangement, the mixing apparatus has tracks to move it over rough terrain. The tracks may be powered.

By way of example only, a specific embodiment of the present invention will now be described, with reference to the accompanying drawings, in which:-
Fig. 1 is a perspective view of an embodiment of mobile concrete mixer in accordance with the present invention;
Fig. 2 is an end view of the concrete mixer of Fig. 1, looking in the direction of arrow A in Fig. 1, but with the mixing auger omitted, for purposes of clarity;
Fig. 3 is a side view of the concrete mixer of Fig. 1, looking in the direction of arrow B in Fig. 1, with the mixing auger in a retracted position; and
Fig. 4 is a side view similar to that of Fig. 3, but with the mixing auger lowered in its operative position.

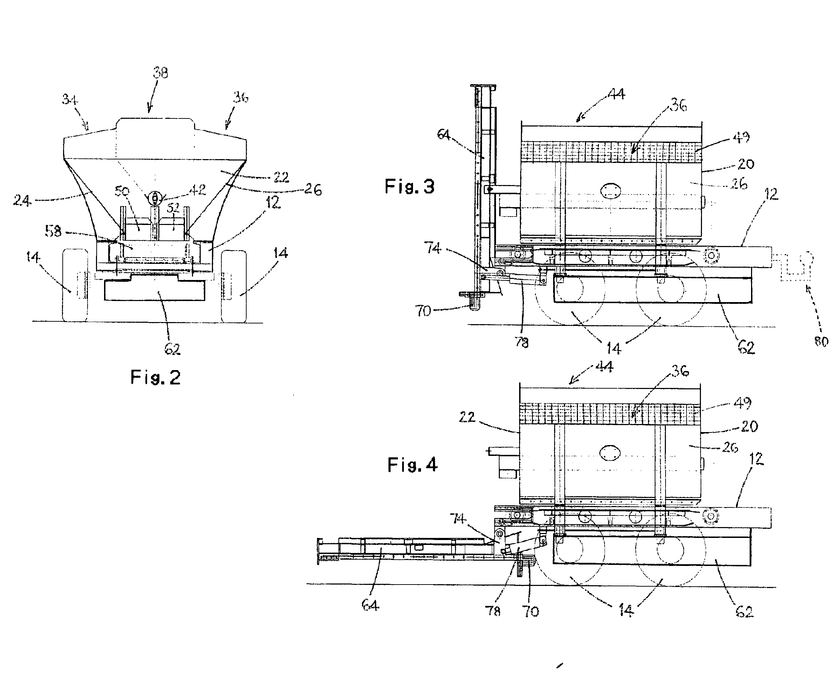

The mobile concrete mixer 10 illustrated in the figures comprises a chassis 12 mounted on wheels 14, the wheels being mounted in pairs on opposed sides of the chassis and each pair of wheels being covered by a mud guard 16 (omitted from Figs. 2 to 4, for clarity). An elongate hopper 18 is also mounted on the chassis.

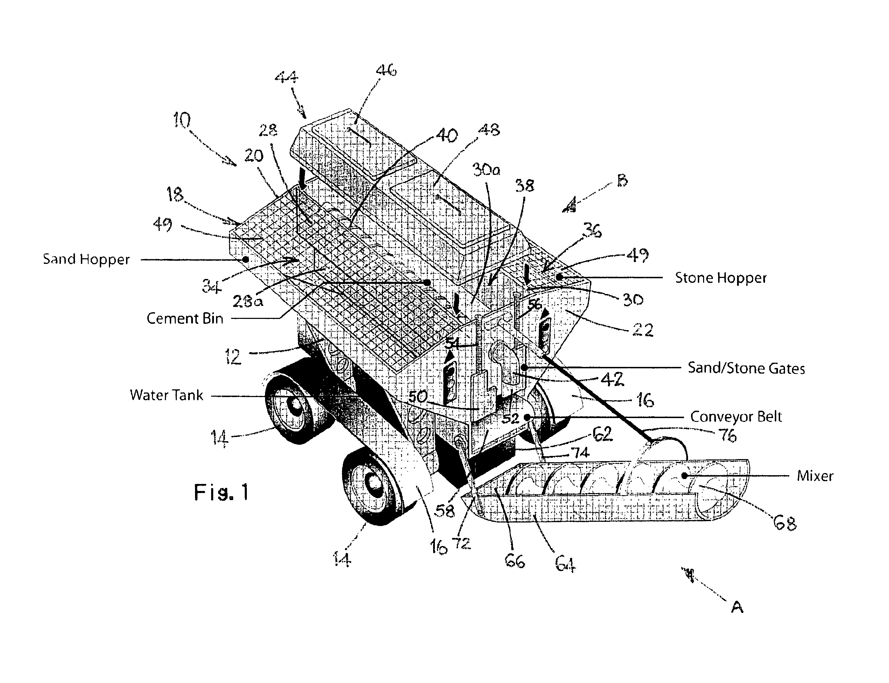

The hopper comprises generally planar front and rear end walls 20, 22 and inclined side walls 24, 26. Parallel planar baffles 28, 28a, 30, 30a extending along the length of the hopper between the end walls 20, 22 divide the hopper 18 into two elongate side compartments 34, 36 and a third, elongate, raised central compartment 38 between the side compartments. The base of the central compartment 38 is at a higher level than bases of the two elongate side compartments 34, 36. An elongate screw conveyor 40 is located at the base of the central compartment 38 for displacing contents of the compartment through a discharge head 42 located on the rear end wall 22. The third, central compartment 38 is also provided with a cover 44 to which access may be gained by removable lids 46, 48. The cover 44 itself is removable, as indicated in Fig. 1. The side compartments 34, 36 are open upwardly to allow easy filling and are covered with a large-meshed gauze 49 to prevent unwanted large objects from entering the compartments.

The discharge of products from the two compartments 34, 36 is controlled by means of respective gates 50, 52 which are adjustable by means of respective screw-threaded drives 54, 56 in the vertical direction.

An endless conveyor belt 58 is located beneath the outlets of the side compartments 34, 36, below the lowermost wall of the central compartment 38 and is adapted to transport material discharged from those compartments to a mixing auger, as will be explained.

An elongate water tank 62 is located beneath the hopper, directly underneath the endless conveyor belt 58 and between the wheels 14 on the opposed side of the frame 12. The tank extends from the rear wheels 14 beyond the front wheels 14, to a position near the frontmost portion of the frame 12, in order to shift its centre of gravity forward. A water pump (not visible in the drawings) is provided in order to pump water from the tank to the mixing auger, as will be explained.

Locating the water tank beneath the hopper, rather than at one end of the hopper, improves the compactness of the mixer, since the tank is located in a region which would otherwise not be used. In particular, discharge of materials from the hopper relies on gravity feed and it would therefore be impractical to locate the hopper where the water tank is situated. Location of the tank 62 beneath the hopper between the wheels 14 on either side of the frame 12 also lowers the centre of gravity of the mixer which facilitates transport and reduces the effect of movement of water during transport.

The mixing auger comprises a straight, elongate trough 64 of semi-circular cross section, which is closed off at the end nearest to the mixer by means of a semi-circular end wall 66. An elongate circular Archimedes screw 68 is rotatably located in the trough 64 and is rotatable by means of an electric motor 70 mounted on the end wall 66.

The trough 64 is pivotally mounted with respect to the chassis by means of two mounting arms 72, 74, each of which is secured to a respective side of the trough adjacent to the end wall, the other end of which is pivotally mounted to the chassis 12. The trough 64 is pivotable between a stowed position illustrated in Fig. 3, in which the trough extends vertically, and a discharge position illustrated in Fig. 4 in which the trough lies horizontally. In Fig. 1, adjustment of the position of the trough is by means of a wire winch 76 whereas in Figs. 2 to 4 adjustment is shown as being by means of a hydraulic ram 78 extending between the chassis 12 and the mounting plates 72, 74.

The end of the mixing apparatus remote from the mixing station may be provided with a tow bar 80, illustrated schematically in Fig. 3, by means of which it may be towed from a vehicle.

In use, the side compartments 34, 36 of the hopper 18 are charged with sand and aggregate (e.g. stones) respectively and the third central compartment 38 is charged with cement. In order to mix concrete, the trough of the mixing station is inclined to a position between the two positions illustrated in Figs. 3 and 4, such as that shown in Fig. 1. The conveyor 58 is then operated and the gates 50, 52 are adjusted which allows material in the compartments 34, 36 to be discharged onto the conveyor 58 and into the mixing apparatus. Simultaneously, the screw conveyor 40 of the third central compartment 38 is operated to discharge cement through the discharge head 42 into the mixing apparatus and the water pump is operated to pump water from the tank 62 into the mixing apparatus. The ingredients are fed into the mixing trough 64 in a continuous fashion. The rotation of the auger 68 mixes the materials continuously, providing a continuous flow of mixed concrete. The process can be stopped and started at will and when finished, the material flow is stopped and the auger 68 can be lowered and emptied.

The invention is not restricted to the details of the aforegoing embodiment. For example, the wheels 14 may be replaced with tracks in order to facilitate use over rough terrain. If desired, the tracks may be powered.

Moreover, although the motor 70 which operates the mixing auger has been described as being electric, a hydraulic motor could be used instead.

## Claims

1. A mobile mixing apparatus (10) comprising:
(a) a frame (12) having spaced-apart ground-engaging supports (14) located on opposite sides of the frame;
(b) a hopper (18) mounted on the frame (12) having a plurality of compartments (34, 36, 38) for solid components;
(c) a mixing station (60);
(d) conveyor means (58) for transferring the solid components to the mixing station;
(e) a tank (62) for liquid; **characterized in that** said tank for liquid is located under the hopper (18) between the opposed ground-engaging supports (14).

2. A mobile mixing apparatus as claimed in claim 1, wherein the spaced-apart ground-engaging supports (14) comprise wheels or tracks.

3. A mobile mixing apparatus as claimed in claim 1 or claim 2, wherein the tank (62) is located beneath the conveyor means (68).

4. A mobile mixing apparatus as claimed in any of claims 1 to 3, wherein the tank (62) is elongate.

5. A mobile mixing apparatus as claimed in any of the preceding claims, wherein the conveyor means (58) comprises a conveyor belt located at the base of the hopper.

6. A mobile mixing apparatus as claimed in any of the preceding claims, wherein the compartments (34, 36, 38) are formed from elongate parallel baffles (28, 28a, 30, 30a) extending the length of the hopper.

7. A mobile mixing apparatus as claimed in claim 6, wherein the hopper (12) is divided into two side compartments (34, 36) and a third compartment (38) between the side compartments.

8. A mobile mixing apparatus as claimed in claim 7, wherein the third compartment (38) comprises a floor or base above the base of the side compartments.

9. A mobile mixing apparatus as claimed in claim 8, wherein the floor or base of the third compartment is located directly above the conveyor means (58).

10. A mobile mixing apparatus as claimed in any of claims 7 to 9, further comprising second conveyor means (40) for transferring solids from the third compartment to the mixing station (60).

11. A mobile mixing apparatus as claimed in any of the preceding claims, wherein the hopper (12) comprises an elongate structure V-shaped in cross-section.

12. A mobile mixing apparatus as claimed in any of the preceding claims, wherein the mixing station (60) is provided adjacent to an end wall (22) of the hopper.

13. A mobile mixing apparatus as claimed in any of the preceding claims, further comprising connector means (80) for connection with the tow point on a vehicle.

## Patentansprüche

1. Mobile Mischvorrichtung (10), die Folgendes umfasst:
(a) einen Rahmen (12) mit in Abständen angeordneten, am Boden angreifenden Stützen (14), die sich auf gegenüberliegenden Seiten des Rahmens befinden;
(b) einen auf dem Lähmen (12) angebrachten Trichter (18) mit mehreren Fächern (34, 36, 38) für komponenten;
(c) eine Mischstation (60);
(d) ein Fördermittel (58) zum Transportieren der festen Komponenten zu der Mischstation;
(e) einen Tank (62) für Flüssigkeit
**dadurch gekennzeichnet, dass** sich der genannte Tank für Flüssigkeit unter dem Trichter (18) zwischen den gegenüberliegenden, am Boden angreifenden Stützen (14) befindet.

2. Mobile Mischvorrichtung nach Anspruch 1, wobei die in Abständen angeordneten, am Boden angreifenden Stützen (14) Räder oder Raupenketten umfassen.

3. Mobile Mischvorrichtung nach Anspruch 1 oder Anspruch 2, wobei sich der Tank (62) unterhalb von dem Fördermittel (68) befindet.

4. Mobile Mischvorrichtung nach einem der Ansprüche 1 bis 3, wobei der Tank (62) langgestreckt ist.

5. Mobile Mischvorrichtung nach einem der vorangehenden Ansprüche, wobei das Fördermittel (58) ein Förderband umfasst, dass sich an der Basis des Trichters befindet.

6. Mobile Mischvorrichtung nach einem der vorangehenden Ansprüche, wobei die Fächer (34, 36, 38) aus langgestreckten parallelen Leitblechen (28, 28a, 30, 30a) gebildet sind, die sich über die Länge des Trichters erstrecken.

7. Mobile Mischvorrichtung nach Anspruch 6, wobei der Trichters (12) in zwei seitliche Fächer (34, 36) und ein drittes Fach (38) zwischen den seitlichen Fächern unterteilt ist.

8. Mobile Mischvorrichtung nach Anspruch 7, wobei das dritte Fach (38) einen Boden oder eine Basis über der Basis der seitlichen Fächer umfaßt.

9. Mobile Mischvorrichtung nach Anspruch 8, wobei sich der Boden bzw. die Basis des dritten Fachs direkt über dem Fördermittel (58) befindet.

10. Mobile Mischvorrichtung nach einem der Ansprüche 7 bis 9, weiter umfassend ein zweites Fördermittel (40) zum Transportieren von Feststoffen von dem dritten Fach zu der Mischstation (60).

11. Mobile Mischvorrichtung nach einem der vorangehenden Ansprüche, wobei der Trichter (12) langgestreckte Struktur mit V-förmigem Querschnitt umfasst.

12. Mobile Mischvorrichtung nach einem der vorangehenden Ansprüche, wobei die Mischstation (60) neben einer Stirnwand (22) des Trichters vorgesehen ist.

13. Mobile Mischvorrichtung nach einem der vorangehenden Ansprüche, weiter umfassend ein Verbindungsmittel (80) für die Verbindung mit der Anhängerkupplung eines Fahrzeugs.

## Revendications

1. Appareil mélangeur mobile (10) comprenant :
a. un châssis (12) doté de supports(14) espacés de mise en prise avec le sol situés sur des côtés opposés du châssis ;
b. une trémie (18) montée sur le châssis (12) dotée d'une pluralité de compartimentes (34, 36, 38) pour des composants solides ;
c. une station de mélange (60) ;
d. un dispositif de transport (58) pour transporter les composantes solides à la station de mélange ;
e. un réservoir (62) à liquide ;
**caractérisé par le fait que** ledit réservoir à liquide est situé sous la trémie (18) entre les supports (14) opposés de mise en prise avec le sol.

2. Appareil mélangeur mobile conforme à la revendication 1, où les supports (14) espacés de mise en prise avec le sol comprennent des roues ou des chenilles.

3. Appareil mélangeur mobile conforme à la revendication 1 ou la revendication 2, où le réservoir (62) est situé sous le dispositif de transport (68).

4. Appareil mélangeur Mobile conforme à une quelconque des revendications 1 à 3, où le réservoir (62) est allongé.

5. Appareil mélangeur mobile conforme à une quelconque des revendications précédentes, où le dispositif de transport (58) comprend une bande transporteuse située à la base de la trémie.

6. Appareil mélangeur mobile conforme à une quelconque des revendication précédentes, ou les compartiments (34, 36, 38) sont formés de déflecteurs parallèles allongés (28, 28a, 30, 30a) s'étendant sur la longueur de la trémie.

7. Appareil mélangeur mobile conforme à la revendication 6, où la trémie (12) est divisée en deux compartiments latéraux (34, 36) et un troisième compartiment (38) entre les deux compartimentes latéraux,

8. Appareil mélangeur mobile conforme à la revendication 7, où le troisième compartiment (38) comprend un plancher ou fond au-dessus du fond des compartiments latéraux.

9. Appareil mélangeur mobile conforme à la revendication 8, où le plancher ou fond du troisième compartiment est situé directement au-dessus du dispositif de transport(58).

10. Appareil mélangeur mobile conforme à une quelconque des revendications 7 à 9, comprenant de plus un deuxième dispositif de transport (40) pour transférer des solides du troisième compartiment à la station de mélange (60).

11. Appareil mélangeur mobile conforme à une quelconque des revendications précédentes, où la trémie (12) comprend une structure allongée de section transversal en forme de V.

12. Appareil mélangeur mobile conforme à une quelconque des revendications précédentes, où la station de mélange (60) est prévue en position adjacente à une paroi d'extrémité (22) de la trémie.

13. Appareil mélangeur mobile conforme à une quelconque des revendications précédentes, comprenant de plus un moyen de connexion (80) pour connexion au point de remorquage d'un véhicule.
